Europäisches Patentamt

European Patent Office

Office européen des brevets

(19)

(11) **EP 1 072 772 B1**

(12) **FASCICULE DE BREVET EUROPEEN**

(45) Date de publication et mention
de la délivrance du brevet:
**11.05.2005 Bulletin 2005/19**

(51) Int Cl.$^7$: **F02C 7/36**, F02C 6/12,
F02C 3/113

(21) Numéro de dépôt: **00402158.0**

(22) Date de dépôt: **27.07.2000**

(54) **Module de génération d'électricité à pile combustible comportant une régulation de pression de la pile à combustible**

Brennstoffzellengenerator mit Druckregelungsmitteln für die Brennstoffzelle

Fuel cell power generating module comprising means for controlling the fuel cell pressure

(84) Etats contractants désignés:
**DE ES GB IT**

(30) Priorité: **28.07.1999 FR 9909783**

(43) Date de publication de la demande:
**31.01.2001 Bulletin 2001/05**

(73) Titulaire: **Renault s.a.s.**
**92100 Boulogne Billancourt (FR)**

(72) Inventeurs:
• **Corgier, David**
**92400 Courbevoie (FR)**
• **Rouveyre, Luc**
**95680 Montlignon (FR)**

(56) Documents cités:
**EP-A- 0 878 859** WO-A-99/13521
**US-A- 5 645 950**

EP 1 072 772 B1

## EP 1 072 772 B1

**Description**

La présente invention a pour objet un module de génération d'électricité comprenant une pile à combustible ainsi qu'un procédé de régulation de la pression du gaz comburant dans une pile à combustible.

D'une manière plus précise, la présente invention concerne un module de génération d'électricité comprenant une pile à combustible alimentée en comburant et rejetant des gaz d'échappement. Par des réactions chimiques faisant intervenir le comburant, la pile à combustible permet de créer un courant afin d'alimenter une charge. Le comburant généralement utilisé est l'air comprimé obtenu à l'aide d'un compresseur.

Dans l'état de la technique, on utilise un circuit comburant comprenant un compresseur pour alimenter la pile à combustible en air comprimé et une turbine couplée au compresseur pour récupérer l'énergie des gaz d'échappement sortant de la pile à combustible et la transmettre mécaniquement au compresseur.

On connaît des systèmes de régulation de la pression dans un module de génération d'électricité, comme celui divulgué dans le brevet US 4 838 020 dans lequel un turbo-compresseur comporte une turbine entraînée par l'écoulement des gaz s'échappant d'un dispositif de charge. Cette première turbine entraîne un compresseur, pour alimenter le dispositif de charge en air comprimé.

Le brevet US 4 838 020 comporte en outre un brûleur auxiliaire, la pression des gaz d'échappement arrivant dans la turbine est régulée en boucle fermée par action sur un système de commande du brûleur. Ce dispositif connu faisant intervenir un brûleur auxiliaire, des valves de contrôle de débit et des unités de contrôle de pression, comporte un système de commande assez complexe.

L'invention vise à apporter une solution à ce problème en simplifiant le système de régulation de la pression du gaz comburant dans une pile à combustible.

L'invention a également pour objet de réguler la pression dans la pile à combustible quel que soit le régime de fonctionnement de cette pile à combustible.

L'invention propose à cet effet un module de génération d'électricité , comprenant une pile à combustible, un compresseur alimentant la pile à combustible en gaz comburant comprimé, une turbine alimentée par des gaz d'échappement de la pile à combustible et reliée mécaniquement au compresseur et un dispositif de régulation de la pression du gaz comburant dans la pile à combustible, un tel module est décrit dans le document US-A-5 645 950. Selon l'invention, le module de génération d'électricité comprend un dispositif variateur de la vitesse de rotation de la turbine interposé dans la liaison mécanique entre le compresseur et la turbine et commandé par le dispositif de régulation de la pression du gaz comburant.

Mathématiquement, on modélise l'évolution de la pression dans une pile à combustible comportant un circuit comburant de volume V constant par l'équation suivante :

$$\frac{d(\text{Pression})}{dt} = (Q_e - Q_s - Q_{elec}) \frac{R\,T}{V} \tag{1}$$

dans laquelle :

T est la température absolue (en Kelvin),
R est la constante du gaz parfait,
$Q_e$ est le débit molaire de gaz comburant entrant dans le système,
$Q_s$ est le débit molaire de gaz comburant sortant du système,
$Q_{elec}$ est le débit molaire de gaz consommé par la réaction électrochimique. Ce débit est directement proportionnel au courant électrique traversant la pile et dépend donc directement de la charge que le système alimente. Les débits molaires sont exprimés en mol/seconde.

La pression du gaz comburant dans la pile à combustible, en celle-ci varie en fonction du courant électrique traversant ladite pile à combustible. On peut représenter cette variation par une courbe de variation dont chaque point correspond à un point de fonctionnement de la pile à combustible. Ce point de fonctionnement n'est pas forcément le point de fonctionnement optimum correspondant au meilleur rendement de la pile à combustible pour une valeur de courant électrique donnée. La régulation de la pression du gaz comburant dans la pile à combustible selon l'invention, permet d'optimiser la courbe de variation sur toute une plage de fonctionnement de la pile à combustible en la faisant passer par des points de fonctionnement optimum.

On assimile avantageusement le débit entrant $Q_e$ à celui du compresseur et le débit sortant $Q_s$ à celui de la turbine. Ainsi, connaissant les formules mathématiques de définition des débits de gaz dans le compresseur et dans la turbine, on peut relier les quantités $Q_e$ et $Q_s$ aux caractéristiques mécaniques du compresseur et de la turbine et plus particulièrement à leur vitesse de rotation. Les formules mathématiques de définition des débits de gaz dans le compresseur et dans la turbine sont :

$$Q_e = N_{compresseur} \cdot \rho \cdot Cy_{compresseur} \cdot \eta\nu_{compresseur} \qquad (2)$$

$$Q_s = N_{turbine} \cdot \rho \cdot Cy_{turbine} \cdot \eta\nu_{turbine} \qquad (3)$$

avec :

$\rho$ étant le nombre molaire volumique du gaz en amont de la pile à combustible,
$N_{compresseur}$ étant la vitesse de rotation du compresseur,
$Cy_{compresseur}$ étant la cylindrée du compresseur,
$\eta\nu_{compresseur}$ étant le rendement volumétrique du compresseur,
$N_{turbine}$ étant la vitesse de rotation de la turbine,
$Cy_{turbine}$ étant la cylindrée de la turbine,
$\eta\nu_{turbine}$ étant le rendement volumétrique de la turbine.

Pour contrôler l'évolution de la pression dans la pile à combustible, il est nécessaire d'après l'équation (1) de contrôler la valeur suivante:

$$Q_e - Q_s - Q_{elec} = \Delta Q \qquad (4)$$

Or, $Q_{elec}$ dépend uniquement de la charge du système. Il ne peut donc être contrôlé. $Q_e$ peut être contrôlé par la vitesse de rotation du compresseur. Toutefois, de sa valeur dépend directement le courant pouvant traverser la pile à combustible. On ne peut donc pas utiliser ce paramètre pour contrôler la valeur $\Delta Q$. Seul $Q_s$ apparaît contrôlable pour satisfaire la relation (4). Pour cela l'invention prévoit de le réguler en agissant sur la vitesse de rotation de la turbine $N_{turbine}$. La turbine étant mécaniquement liée au compresseur pour des facilités d'intégration, on agit sur la vitesse de rotation de la turbine $N_{turbine}$ par l'intermédiaire d'un dispositif variateur de vitesse.

Avantageusement, le dispositif variateur de la vitesse de rotation de la turbine permet de modifier le rapport entraînement mécanique entre le compresseur et la turbine.

Le dispositif de régulation de la pression du gaz comburant peut comprendre un comparateur pour déterminer un écart de pression entre une pression demandée et la pression du gaz comburant dans la pile à combustible. L'énergie récupérée par la turbine est transmise mécaniquement au compresseur à travers le dispositif variateur de vitesse. Le dispositif variateur de vitesse, relié mécaniquement au compresseur et à la turbine, permet de lier la vitesse de rotation du compresseur à la vitesse de rotation de la turbine au moyen du rapport d'entraînement qui est la division de la vitesse de rotation de la turbine par la vitesse de rotation du compresseur.

De préférence, le dispositif de régulation de la pression du gaz comburant comprend un correcteur qui reçoit l'écart de pression et génère un signal de commande vers le dispositif variateur de la vitesse de rotation de la turbine.

Ce correcteur peut être un correcteur de type proportionnel-intégral-dérivé (PID) contrôlant le rapport d'entraînement en fonction de la déviation de la pression des gaz comburant dans la pile à combustible par rapport à la valeur de pression demandée.

Selon un mode de mise en oeuvre avantageux de l'invention, la turbine est du type volumétrique et le module de génération d'électricité comprend un moteur couplé au compresseur et à la turbine.

L'invention concerne également un procédé de régulation de la pression du gaz comburant d'une pile à combustible recevant un flux de gaz comburant et rejetant des gaz d'échappement. Selon l'invention, la pression du gaz dans la pile à combustible est régulée par une loi de commande reliant cette pression du gaz comburant dans la pile à combustible à un courant traversant cette pile à combustible.

Selon une caractéristique de l'invention, les gaz d'échappement sont injectés dans une turbine et on agit sur la vitesse de rotation de la turbine en fonction d'un écart de pression entre la pression du gaz comburant dans la pile à combustible et une valeur de consigne de pression.

D'autres avantages et caractéristiques de l'invention apparaîtront à l'examen de la description détaillée d'un mode de mise en oeuvre nullement limitatif, et des dessins annexés sur lesquels :

-  la figure 1 est une vue schématique d'un module de génération d'électricité selon l'invention,
-  la figure 2 est une courbe de variation limite de la pression du gaz comburant dans la pile à combustible en fonction du courant électrique traversant cette pile à combustible.

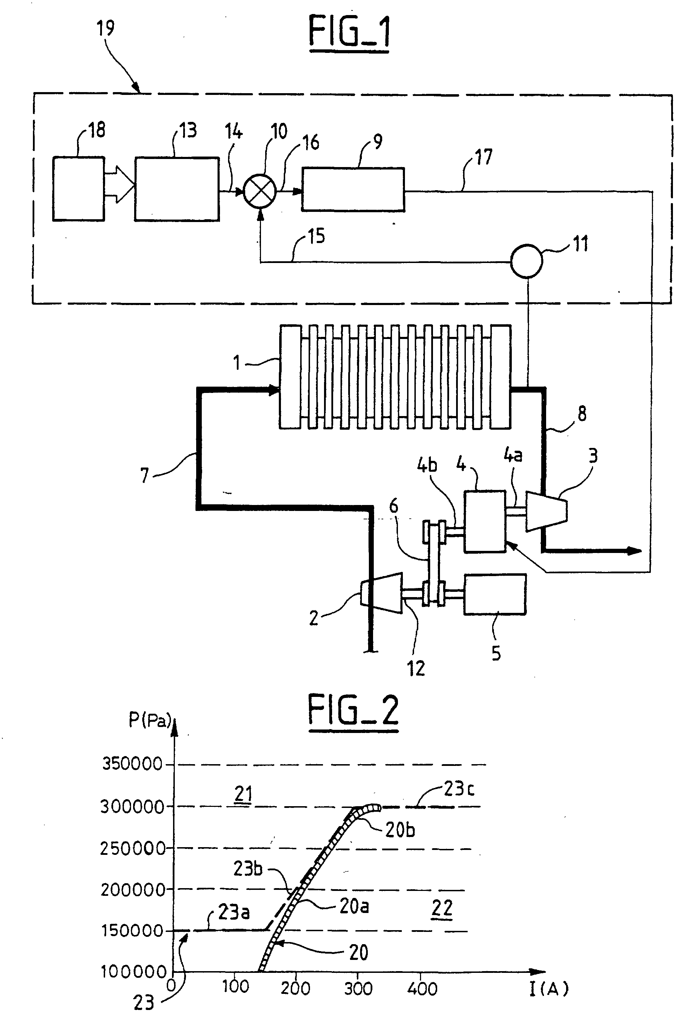

La figure 1 montre un module générateur d'électricité comprenant une pile à combustible 1, un compresseur à vis 2 alimentant la pile à combustible 1 à l'aide d'un flux d'air comprimé 7. Un moteur 5 entraîne le compresseur à vis 2 au moyen d'un arbre d'entraînement 12. Les gaz d'échappement 8 de la pile à combustible 1 alimentent une turbine volumétrique 3. Un dispositif variateur de vitesse 4 comportant deux arbres d'entraînement 4a et 4b est relié mécaniquement à la turbine volumétrique 3 au compresseur à vis 2 et au moteur 5.

La turbine volumétrique 3 transmet l'énergie de détente des gaz d'échappement sortant de la pile à combustible 1 au dispositif variateur de vitesse 4 sous forme d'énergie mécanique à travers l'arbre d'entrée 4a. Ce dispositif variateur de vitesse 4 transmet cette énergie mécanique au compresseur à vis 2 sous forme de puissance mécanique à travers l'arbre de sortie 4b. Une courroie 6 entourant une partie de l'arbre de sortie 4b et une partie de l'arbre d'entraînement 12 concrétise la liaison entre le dispositif variateur de vitesse 4 et le compresseur à vis 2. Cette liaison peut également être réalisée à l'aide d'un train d'engrenage. Le compresseur à vis 2 reçoit un couple de force venant du dispositif variateur de vitesse 4 en plus de celle fournie par le moteur 5.

La liaison mécanique représentée par le dispositif variateur de vitesse 4 ainsi que les arbres 4a, 4b et 12 permet donc de récupérer l'énergie de détente des gaz d'échappement 8 sortant de la pile à combustible 1 et de la transmettre sous forme de couple de force au compresseur à vis 2.

Le dispositif variateur de vitesse 4 comporte des moyens non représentés permettant de faire varier le rapport d'entraînement k entre la vitesse de rotation de la turbine 3 et la vitesse de rotation du compresseur 2. Ce rapport d'entraînement k, qui est le résultat de la division de la vitesse de rotation de la turbine 3 par la vitesse de rotation du compresseur à vis 2, est contrôlé par un dispositif de régulation de pression 19 comprenant un module régulateur 13 comportant une loi de commande de la pression en fonction du courant électrique traversant la pile à combustible 1. Le module régulateur 13 reçoit une consigne 18 de courant électrique devant être fourni par la pile à combustible 1 et génère une consigne de pression 14 qui est délivrée à une entrée d'un comparateur 10. La seconde entrée de ce comparateur 10 reçoit un signal 15 représentant la pression des gaz d'échappement 8 mesurée à la sortie de la pile à combustible 1 à l'aide d'un capteur de pression 11. Le comparateur 10 génère un écart de pression 16 résultant de la différence entre la consigne de pression 14 et le signal de pression 15, soit une différence entre une pression demandée et la pression réelle à la sortie de la pile à combustible 1. L'écart de pression 16 est délivré à l'entrée d'un correcteur 9 par exemple de type proportionnel-intégral-dérivé (PID) qui émet à sa sortie un signal de commande 17 pour le dispositif variateur de vitesse 4.

Le dispositif de régulation de pression 19 permet ainsi de comparer une consigne de pression 14 à un signal 15 de pression mesuré dans la pile à combustible 1, puis de commander le dispositif variateur de vitesse 4.

La figure 2 montre une courbe 20 de variation limite de la pression P du gaz comburant dans la pile à combustible 1 en fonction du courant électrique I traversant cette pile à combustible 1, dans laquelle la pression est exprimée en Pascal (Pa) et le courant électrique en Ampère (A). Pour un courant électrique variant de 150 A à 350 A, la pression évolue de $10^5$ Pa à $3*10^5$ Pa. La courbe 20 présente une première partie linéaire 20a pour laquelle le courant électrique varie de 150 A à 250 A et les valeurs de pression de $10^5$ Pa à $2,5*10^5$ Pa, et une seconde partie en courbure 20b entre 250 A et 350 A tendant de façon asymptotique vers une valeur de pression égale à $3 * 10^5$ Pa. La courbe 20 de variation limite passe par des points correspondant à des valeurs de pression limite inférieure en dessous desquels la pile ne fonctionne pas. La zone de fonctionnement correspond à une partie 21 au dessus de la courbe 20 de variation limite dans laquelle les valeurs de pression sont supérieures aux valeurs de pression limite inférieure. La zone interdite correspond à une partie 22 en dessous de la courbe 20 de variation limite.

A partir de la courbe 20 de variation limite, on déduit une loi de commande 23 représentée en trait pointillé sur la figure 2 et composée de trois parties 23a, 23b et 23c. La première partie 23a est un palier d'une valeur de pression constante et égale à $1,5*10^5$ Pa pour des valeurs de courant électrique inférieures ou égales à 150 A. La deuxième partie 23b est une droite oblique pour laquelle la pression varie linéairement en fonction du courant électrique entre deux points de coordonnées (150 A ; $1,5* 10^5$ Pa) et (285 A ; $3*10^5$ Pa). La troisième partie 23c est de nouveau un palier d'une valeur de pression constante et égale à $3*10^5$ Pa pour des valeurs de courant électrique supérieures à 285 A. La loi de commande 23 est utilisée par le module de régulation 13.

Le module générateur d'électricité selon l'incention est énergétiquement optimisé du fait de la présence d'une turbine à la sortie de la pile à combustible qui permet de récupérer l'énergie contenue dans les gaz d'échappement et du fait que la pression des gaz dans la pile à combustible est contrôlée quelque soit l'évolution de la charge lors du fonctionnement, c'est-à-dire quelque soit le courant électrique traversant la pile à combustible, grâce à la régulation du rapport d'entraînement k.

Pour une valeur de courant donnée, le dispositif de régulation de la pression du gaz comburant dans la pile à combustible est à même de faire évoluer cette pression vers une valeur de pression correspondant à un point de fonctionnement optimum de la pile à combustible.

# EP 1 072 772 B1

## Revendications

1. Module de génération d'électricité comprenant une pile à combustible (1), un compresseur (2) alimentant la pile à combustible (1) en gaz comburant comprimé (7), une turbine (3) alimentée par des gaz (8) s'échappant de la pile à combustible (1) et reliée mécaniquement au compresseur (2), et un dispositif de régulation (19) de la pression du gaz comburant dans le pile à combustible (1), **caractérisé par le fait qu'**il comprend un dispositif variateur (4) de la vitesse de rotation de la turbine (3) interposé dans la liaison mécanique entre le compresseur (2) et la turbine (3) et commandé par le dispositif de régulation (19) de la pression du gaz comburant.

2. Module de génération d'électricité selon la revendication (1), **caractérisé par le fait que** le dispositif variateur (4) de la vitesse de rotation de la turbine (3) permet de modifier le rapport d'entraînement mécanique entre le compresseur (2) et la turbine (3).

3. Module de génération d'électricité selon l'une des revendications précédentes, **caractérisé par le fait que** le dispositif de régulation (19) de la pression du gaz comburant comprend un comparateur (10) pour déterminer un écart de pression (16) entre une pression demandée (14) et la pression (15) du gaz comburant dans le pile à combustible.

4. Module de génération d'électricité selon l'une quelconque des revendications précédentes, **caractérisé par le fait que** le dispositif de régulation (19) de la pression du gaz comburant comprend un correcteur (9) qui reçoit l'écart de pression (16) et génère un signal de commande (17) vers le dispositif variateur (4) de la vitesse de rotation de la turbine (2).

5. Module de génération d'électricité selon l'une quelconque des revendications précédentes, **caractérisé par le fait que** la turbine (3) est du type volumétrique.

6. Module de génération d'électricité selon l'une quelconque des revendications précédentes, **caractérisé par le fait qu'**il comprend un moteur (5) couplé au compresseur (2) et à la turbine (3).

## Patentansprüche

1. Modul zur Erzeugung von Elektrizität, umfassend eine Brennstoffzelle (1), einen Kompressor (2), der die Brennstoffzelle (1) mit komprimiertem, die Verbrennung bewirkendem Gas (7) versorgt, eine Turbine (3), der die Gase (8) zugeführt werden, die aus der Brennstoffzelle (1) entweichen, und die mechanisch mit dem Kompressor (2) verbunden ist, und eine Vorrichtung zur Regelung (19) des Drucks des die Verbrennung bewirkenden Gases in der Brennstoffzelle ( 1 ),
**dadurch gekennzeichnet, dass** es eine Vorrichtung zur Regelung (4) der Umdrehungsgeschwindigkeit der Turbine (3) umfasst, die in der mechanischen Verbindung zwischen dem Kompressor (2) und der Turbine (3) zwischengeschaltet ist und durch die Vorrichtung zur Regelung (19) des Drucks des die Verbrennung bewirkenden Gases gesteuert wird.

2. Modul zur Erzeugung von Elektrizität gemäß Anspruch 1, **dadurch gekennzeichnet, dass** es die Vorrichtung zur Regelung (4) der Umdrehungsgeschwindigkeit der Turbine (3) erlaubt, das Kraftantriebsverhältnis zwischen dem Kompressor (2) und der Turbine (3) zu verändern.

3. Modul zur Erzeugung von Elektrizität gemäß einem der vorhergehenden Ansprüche, **dadurch gekennzeichnet, dass** die Vorrichtung zur Regelung (19) des Drucks des die Verbrennung bewirkenden Gases einen Vergleicher (10) umfasst, um eine Abweichung des Drucks (16) zwischen einem verlangten Druck (14) und dem Druck (15) des die Verbrennung bewirkenden Gases in der Brennstoffzelle zu bestimmen.

4. Modul zur Erzeugung von Elektrizität gemäß einem der vorhergehenden Ansprüche, **dadurch gekennzeichnet, dass** die Vorrichtung zur Regelung (19) des Drucks des die Verbrennung bewirkenden Gases einen Korrektor (9) umfasst, der die Druckabweichung (16) empfängt und ein Steuersignal (17) an die Vorrichtung zur Regelung (4) der Umdrehungsgeschwindigkeit der Turbine (2) erzeugt.

5. Modul zur Erzeugung von Elektrizität gemäß einem der vorhergehenden Ansprüche, **dadurch gekennzeichnet, dass** die Turbine (3) vom volumetrischen Typ ist.

6. Modul zur Erzeugung von Elektrizität gemäß einem der vorhergehenden Ansprüche, **dadurch gekennzeichnet, dass** es einen Motor (5) umfasst, der mit dem Kompressor (2) und der Turbine (3) gekoppelt ist.

**Claims**

1. An electricity generating module comprising a fuel cell (1), a compressor (2) supplying the fuel cell (1) with compressed oxidant gas (7), a turbine (3) supplied with exhaust gas (8) from the fuel cell (1) and mechanically connected to the compressor (2) and a device (19) for regulating the pressure of the oxidant gas in the fuel cell (1), **characterized in that** it comprises a device (4) for varying the rotational speed of the turbine (3) interposed in the mechanical linkage between the compressor (2) and the turbine and controlled by the device (19) for regulating the pressure of the oxidant gas.

2. An electricity generating module according to claim 1, **characterized in that** the device (4) for varying the rotational speed of the turbine (3) can modify the mechanical drive ratio between the compressor (2) and the turbine (3).

3. An electricity generating module according to one of the preceding claims, **characterized in that** the device (19) for regulating the pressure of the oxidant gas comprises a comparator (10) for determining a pressure difference (16) between a demand pressure (14) and the pressure (15) of the oxidant gas in the fuel cell.

4. An electricity generating module according to any one of the preceding claims, **characterized in that** the device (19) for regulating the pressure of the oxidant gas comprises a controller (9) which receives the pressure difference (16) and generates a command signal (17) to the device (4) for varying the rotational speed of the turbine (2).

5. An electricity generating module according to any one of the preceding claims, **characterized in that** the turbine (3) is volumetric in type.

6. An electricity generating module according to any one of the preceding claims, **characterized in that** it comprises a motor (5) coupled to the compressor (2) and to the turbine (3).

EP 1 072 772 B1

# FIG_1

# FIG_2